Europäisches Patentamt

European Patent Office

Office européen des brevets

(11) Veröffentlichungsnummer: **0 515 887 A2**

# EUROPÄISCHE PATENTANMELDUNG

(21) Anmeldenummer: **92107862.2**

(22) Anmeldetag: **11.05.92**

(51) Int. Cl.5: **F16B 5/12**

(30) Priorität: **25.05.91 DE 4117114**

(43) Veröffentlichungstag der Anmeldung:
**02.12.92 Patentblatt 92/49**

(84) Benannte Vertragsstaaten:
**BE ES FR GB IT NL SE**

(71) Anmelder: **A. Raymond KG**
**Teichstrasse 57**
**W-7850 Lörrach(DE)**

(72) Erfinder: **Jünemann, Dietrich**
**Scherrbrunnenweg 7**
**W-7850 Lörrach(DE)**
Erfinder: **Silbereisen, Friedrich**
**Winzerweg 11**
**W-7859 Efringen-Kirchen(DE)**

(74) Vertreter: **Kirchgaesser, Johannes, Dipl.-Ing.**
**p/a Fa. A. RAYMOND KG, Teichstrasse 57**
**W-7850 Lörrach(DE)**

(54) **Zweiteiliges Halteelement für Schutzleisten.**

(57) Die Erfindung bezieht sich auf ein zweiteiliges Halteelement aus hartelastischem Kunststoff zur Befestigung von Schutz- oder Zierleisten an Trägerplatten oder Verkleidungsblechen, wie z.B. an Karosserieblechen von Kraftfahrzeugen.

Das Halteelement besteht aus einem mit der Schutzleiste (3) verbindbaren Oberteil (1) sowie einer in ein Loch (24) der Trägerplatte (4) einsteckbaren und am Lochrand (25) mittels elastisch nachgebender Rastelemente (17) verankerbaren, nach unten offenen Tülle (2), welche sich auf der Trägerplatte (4) mit einem Dichtschirm (16) elastisch abstützt. Das Oberteil (1) besteht hierbei aus einer in die Schutzleiste (3) einsetzbaren Kopfplatte (5) sowie einem von dieser senkrecht abstehenden Stopfen (6) mit einer in beiden Achsrichtungen sich konisch verjüngenden Verdickung, während die Tülle (2) mit einer gegenüber den Stopfen (6) verengten Durchgangsöffnung (19) zum Einrasten der Stopfenverdickung (7) versehen ist.

Um das Spritzwasser am Eindringen in die Befestigungslöcher des Karosserieblechs zu hindern, ist am Öffnungsrand (20) der Tülle (2) ein weiterer, vom ersten Dichtungsschirm (16) wegstrebender Dichtschirm (23) angeformt, der sich im eingerasteten Zustand des Stopfens (6) an der zur Trägerplatte (4) parallelen Kopfplatte (5) des Oberteils (1) rings um den Stopfen (6) ebenfalls dichtend abstützt.

FIG.5

Die Erfindung bezieht sich auf ein zweiteiliges Halteelement aus hartelastischem Kunststoff zur Befestigung von Schutz- oder Zierleisten an Trägerplatten oder Verkleidungsblechen, wie z.B. an Karosserieblechen von Kraftfahrzeugen.

Das beispielsweise aus DE 31 14 283 A1 bekannte Halteelement besteht aus einem mit der Schutzleiste verbindbaren Oberteil sowie einer in ein Loch der Trägerplatte einsteckbaren und am Lochrand mittels elastisch nachgebender Rastelemente verankerbaren, nach unten offenen Tülle, welche sich auf der Trägerplatte mit einem Dichtschirm elastisch abstützt. Das Oberteil besteht hierbei aus einer in die Schutzleiste einsetzbaren Kopfplatte sowie einem von dieser senkrecht abstehenden Stopfen mit einer in beiden Achsrichtungen sich konisch verjüngenden Verdickung, während die Tülle mit einer gegenüber den Stopfen verengten Durchgangsöffnung zum Einrasten der Stopfenverdickung versehen ist.

Das bekannte Halteelement wird üblicherweise im zusammengebauten Zustand mit der Kopfplatte in die Schutzleiste eingesetzt und mit dieser zusammen am Karosserieblech oder dem Türaußenblech befestigt, wobei die Tüllen in die Befestigungslöcher soweit eingedrückt werden, bis die Rastmittel den Lochrand hintergreifen.

Dieses an sich bedienungsfreundliche Befestigungsprinzip hat den entscheidenden Nachteil, daß das zwischen Zierleiste und Karosserie eindringende Spritzwasser durch die Tülle, welche sowohl bei den im Außenmantel eingeschnittenen Rastelementen als auch nach unten hin offen ist, ungehindert eindringen kann, was über kurz oder lang an verschiedenen nichtgeschützten Blechstellen zu Rostfraß führen muß. Dies kann angesichts der allgemein angestrebten bzw. geforderten Rostschutzmaßnahmen nicht mehr hingenommen werden.

Aufgabe der Erfindung ist es daher, das eingangs beschriebene Halteelement so zu gestalten, daß das Spritzwasser am Eindringen in die Befestigungslöcher des Karosserieblechs gehindert wird.

Dies wird nach der vorliegenden Erfindung dadurch erreicht, daß am Öffnungsrand der Tülle ein weiterer, vom ersten Dichtungsschirm wegstrebender Dichtschirm angeformt ist, der sich im eingerasteten Zustand des Stopfens an der zur Trägerplatte parallelen Kopfplatte des Oberteils rings um den Stopfen ebenfalls dichtend abstützt.

Durch diese Maßnahme wird das Befestigungsloch in der Trägerplatte und damit der Innenraum zwischen Karosserieblech und Innenverkleidung gegen den vom Spritzwasser erreichbaren Raum unter der Schutz- bzw. Zierleiste wirksam abgedichtet.

Voraussetzung ist natürlich, daß die Kopfplatte etwas breiter ist als der Durchmesser des leicht gespreizten Dichtschirms, der nach einem weiteren Merkmal der Erfindung gleichzeitig als Einführtrichter für die Durchgangsöffnung ausgebildet sein kann.

In der Zeichnung ist ein Ausführungsbeispiel der Erfindung dargestellt und soll nachfolgend näher erläutert werden. Es zeigt

Fig. 1    ein Oberteil mit Stopfen in Seitenansicht,

Fig. 2    die halbe Länge des Oberteils in Draufsicht,

Fig. 3    die zugehörige Tülle im Schnitt,

Fig. 4    die Tülle in Draufsicht mit Teilschnitt durch den Tüllenmantel,

Fig. 5    das Halteelement mit auf dem Stopfen vormontierter Tülle und aufgesetzter Schutzleiste über dem Befestigungsloch der Trägerplatte und

Fig. 6    das Halteelement mit aufgesetzter Schutzleiste im montierten Zustand.

Das in den Figuren dargestellte Halteelement besteht aus einem Oberteil 1 und einem mit diesem verbindbaren Unterteil 2, der sogenannten Tülle.

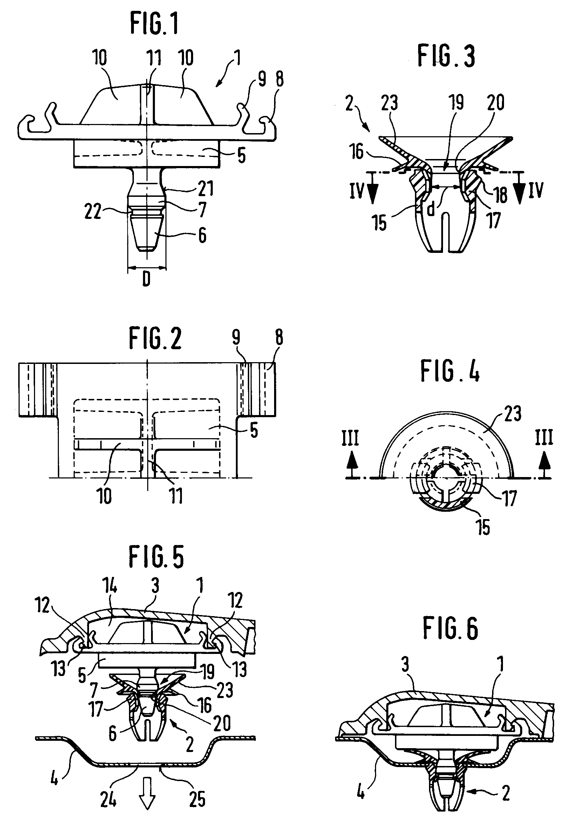

Das Oberteil 1 dient, wie aus Fig. 5 und 6 ersichtlich, zur Halterung einer Schutz- oder Zierleiste 3, welche an einer Trägerplatte 4, beispielsweise einem Karosserieblech eines Kraftfahrzeuges, mittels des Halteelementes befestigt werden soll.

Das in den Figuren 1 und 2 vergrößert dargestellte Oberteil 1 besteht hierbei aus einer in die Schutzleiste 3 einsetzbaren Kopfplatte 5 sowie einem von der Kopfplatte 5 senkrecht abstehenden Stopfen 6, der eine in beiden Achsrichtungen sich konisch verjüngende Verdickung 7 aufweist. Die Kopfplatte 5 ist in der Draufsicht im wesentlichen rechteckig ausgebildet und besitzt an den vier Ecken jeweils zwei Klemmschenkel 8 und 9 sowie in deren Mitte hochstehende Stützrippen 10 und 11.

Um das Oberteil 1 mit der Schutzleiste 3 verbinden zu können, besitzt diese an ihrer Unterseite zwei sich in Längsrichtung erstreckende Haltestege 12 mit nach außen weisenden Rastkanten 13, welche zwischen die Klemmschenkel 8 und 9 eindrückbar sind. Zwischen den Haltestegen 12 befindet sich eine Aussparung 14, in welche die auf der Kopfplatte 5 aufgesetzten Rippen 10 und 11 nach dem Eindrücken der Rastkanten 13 in die Klemmschenkel 8 und 9 bis zur Anlage an die Innenwand der Schutzleiste 3 eintauchen, so daß der auf die Schutzleiste 3 ausgeübte Druck über die Rippen 10 und 11 und den Stopfen 6 auf die Tülle 2 übertragen wird.

Die in den Figuren 3 und 4 gezeigte Tülle 2 besitzt einen in das Befestigungsloch 24 der Trägerplatte 4 einsteckbaren, in Einsteckrichtung leicht bogenförmig zusammenlaufenden, ringförmigen Mantel 15 mit einem sich auf der Trägerplatte 4 elastisch abstützenden Dichtschirm 16 und zwei unterhalb des Dichtschirms angeordneten, elastisch nachgebenden Rastelementen 17, welche beim Eindrücken der Tülle 2 in das Befestigungsloch der Trägerplatte 4 mit nach außen abstehenden Rastnasen 18 den Lochrand 25 hintergreifen, so daß die Tülle 2 in der Trägerplatte 4 fest verankert ist.

In der Mitte des Dichtschirms 16 befindet sich eine trichterförmig zusammenlaufende Durchgangsöffnung 19 zum Einführen des Stopfens 6. Diese Durchgangsöffnung 19 hat einen gegenüber der Stopfenverdickung 7 verengten Öffnungsrand 20, wobei dessen Durchmesser "d" auf den Durchmesser "D" der Stopfenverdickung 7 derart abgestimmt ist, daß sich der Stopfen 6 unter elastischer Aufweitung des Öffnungsrandes 20 in die Durchgangsöffnung 19 eindrücken läßt. Der Öffnungsrand 20 zieht sich hierbei nach dem Passieren der Verdickung 7 wieder zusammen und stützt sich dann auf der sich konisch verjüngenden Kegelfläche 21 des Stopfens 6 ab (Fig. 6).

Unterhalb der Verdickung 7 weist der Stopfen 6 noch eine umlaufende Rille 22 auf, in welche der Öffnungsrand 20 bei der Vormontage des Halteelementes einrasten kann, so daß das Halteelement für die Anlieferung bereits vereinigt ist (Fig. 5).

Um zu verhindern, daß zwischen Schutzleiste 3 und Trägerplatte 4 hindurchtretendes Spritz- oder Regenwasser durch die nach unten offene Tülle 2 in den Innenraum zwischen Trägerplatte 4 und der nicht dargestellten Innenverkleidung dringt, ist am Öffnungsrand 20 ein weiterer, vom ersten Dichtschirm 16 wegstrebender Dichtschirm 23 angeformt, der sich an der zur Trägerplatte 4 parallelen Kopfplatte 5 des Oberteils 1 rings um den Stopfen 6 ebenfalls dichtend abstützt, wenn die Stopfenverdickung im Öffnungsrand 20 eingerastet ist. Dieser zweite Dichtschirm 23 bildet zweckmäßigerweise gleichzeitig den Einführtrichter für die Durchgangsöffnung 19, so daß sich der Stopfen 6 problemlos in die Durchgangsöffnung 19 einführen läßt.

## Patentansprüche

1. Zweiteiliges Halteelement aus hartelastischem Kunststoff zur Befestigung von Schutz- oder Zierleisten an Trägerplatten, bestehend aus einem mit der Schutzleiste verbindbaren Oberteil sowie einer in ein Loch der Trägerplatte einsteckbaren und am Lochrand mittels elastisch nachgebender Rastelemente verankerbaren Tülle, welche sich auf der Trägerplatte mit einem Dichtschirm elastisch abstützt, wobei das Oberteil aus einer in die Schutzleiste einsetzbaren Kopfplatte sowie einem von dieser senkrecht abstehenden Stopfen mit einer in beiden Achsrichtungen sich konisch verjüngenden Verdickung besteht und die Tülle mit einer gegenüber der Stopfenverdickung verengten Durchgangsöffnung zum Einrasten der Stopfenverdickung versehen ist, **dadurch gekennzeichnet,** daß am Öffnungsrand (20) der Tülle (2) ein weiterer, vom ersten Dichtschirm (16) wegstrebender Dichtschirm (23) angeformt ist, der sich im eingerasteten Zustand des Stopfens (6) an der zur Trägerplatte (4) parallelen Kopfplatte (5) des Oberteils (1) rings um den Stopfen (6) ebenfalls dichtend abstützt.

2. Halteelement nach Anspruch 1, dadurch gekennzeichnet, daß der zweite Dichtschirm (23) gleichzeitig als Einführtrichter für die Durchgangsöffnung (19) ausgebildet ist.

FIG.1

FIG.3

FIG.2

FIG.4

FIG.5

FIG.6